# EUROPEAN PATENT SPECIFICATION

(11) **EP 3 299 280 B1**
(45) Date of publication and mention of the grant of the patent: **26.08.2020**
(21) Application number: 17191934.3
(22) Date of filing: 19.09.2017
(51) Int. Cl.: B64C 3/56

(54) **FOLDABLE AIRCRAFT WITH ANHEDRAL STABILIZING WINGS**
FALTBARES FLUGZEUG MIT ABWÄRTSGERICHTETEN STABILISIERUNGSFLÜGELN
AÉRONEF PLIABLE COMPORTANT DES AILES DE STABILISATION À DIÈDRE NÉGATIF

(30) Priority: 21.09.2016 US 201615272311
(43) Date of publication of application: 28.03.2018
(73) Proprietor: Bell Helicopter Textron Inc., Fort Worth, TX 76101 (US)
(72) Inventor: ROBERTS, Brad J, Fort Worth, TX 76116 (US); IVANS, Steven R, Ponder, TX 76259 (US)
(74) Representative: Barker Brettell LLP

(56) References cited:
- EP-A1- 3 296 201
- EP-B1- 2 105 378
- DE-A1- 2 901 115
- GB-A- 432 245
- GB-A- 2 488 552
- US-A- 4 998 689
- US-A- 5 337 974
- US-A1- 4 691 878
- US-A1- 2010 327 123
- US-A1- 2011 226 174

## Description

### BACKGROUND

### Technical Field:

The present disclosure relates to an aircraft, and more particularly, to an aircraft where the wing is stowed in the tail area.

### Description of Related Art:

Modern aircraft include a main wing having surfaces for generating lift. The main wing is large enough to sustain flight and typically has a large footprint making it difficult to store a conventional aircraft in restricted spaces such as on the deck of an aircraft carrier or in a hangar.

Wing stowage systems have been used to reduce the footprint for some aircraft. One example of a wing stowage system is a stowable rotating wing system that rotates the fixed main wing in non-flight conditions to be generally parallel to the fuselage. Examples of stowable rotating wing systems are the V-22 Osprey and U.S. Patent No. 5,337,974. The V-22 Osprey includes an extended tail so that when the wing is rotated parallel to the fuselage the wing-nacelle with rotor has clearance from the tail section. The extended tail length adds weight and has a longer footprint extending beyond the rotated wing section.

US 2010/327123 discloses a tiltrotor aircraft having a foldable wing.

US 4,691.878 discloses a mechanism and method for folding the wing of a tilt-rotor aircraft, having a rotatable load bearing member cooperatively disposed between a high point of the fuselage and the tilt-rotor wing, and a plurality of locking, load bearing pin joints disposed between the fuselage and the tilt-rotor wing, concentric to the rotatable load bearing member, and wherein the tilt-rotor wing may be stored by rotating the tilt-rotor wing, as a single segment, about the rotatable load bearing member, to a position substantially parallel to the fuselage, and wherein the wing may be locked in the flight configuration and the storage configuration with the same pin joints.

DE 2,901,115 discloses a fixed-cum-rotary wing aircraft that has a pair of horizontal rotors centred above the fixed-wing tips, driven via shafting by a power unit in the fuselage. Forward thrust is provided by angling the rotor plane at 20-30 deg. w.r.t. the aircraft's longitudinal axis, in the direction of flight. Adequate flow velocity over the control surfaces - pref. of inverted-V form - is ensured by blowing air/gas over them, via internal ducting from the propulsion unit. For landing, a sub-assembly within the cabin comprising pilot's seat and controls can be tilted forwards about a horizontal hinge.

EP 2,105,378 discloses a helicopter that has a lift rotor provided with blades arranged at top of a central fuselage, and a support lift surface provided with half wings. A mechanical interconnection system mechanically interconnects the rotor and propellers of the wings. The surface is arranged at rear of the helicopter between a turning rotor strut and a rear end of the fuselage, where the helicopter is equipped with a self-leveling surface arranged at a level of a front end of the fuselage.

Another example of a wing stowage system is a wing folding system. There are many mechanisms for folding the main wing to reduce the wing span during storage. Examples of this conventional approach are described in U.S. Patent No. 8,387,913. Another example is the S-3 Viking that has folding wings and a vertical tail that is folded downward to reduce the height of the aircraft for storage.

Modern aircraft including stabilizing wings that are smaller than the main wing and contribute to lift, stability, trim, and flight control. The stabilizing wings are typically either tail wings ("tails") or forward wings ("canards") of the aircraft.

Stabilizing wings that are other than horizontal or vertical are conventionally in a dihedral angle orientation such that the wings extend in an upward angle from the horizontal axis of the main wing. Some aircraft have tail wings at an anhedral orientation such that the wings extend in a downward angle from the horizontal axis of the main wing; however, landing and ground clearance of the tail during landing are difficult. For example, the MQ-1 Predator has an anhedral tail with minimal ground clearance and is used to protect the propeller. The MQ-1 Predator uses a longer runway, requires a higher speed for take-off, and has a longer footprint as compared to an aircraft as disclosed herein.

There is a need for an improved foldable aircraft that incorporates stabilizing wings in an anhedral orientation.

### SUMMARY

According to the present disclosure, there is provided an aircraft according to claim 1 and an aircraft according to claim 9. Optional features of each of the claimed aircrafts are set out in the dependent claims.

In a first aspect, there is provided an aircraft according to claim 1. In a second aspect, there is provided an aircraft according to claim 9.

In an exemplary embodiment, the foldable wing comprises a hub area and a pair of fixed main wings, the hub area being connected to the fuselage and the pair of fixed main wings.

In one exemplary embodiment, the pair of fixed main wings has a foldable portion on the distal end of each wing.

In another exemplary embodiment, the foldable portion has a foldable rotor blade.

In yet another exemplary embodiment, the fuselage has a tail portion, the pair of stabilizing wings disposed on the tail portion of the fuselage. In one embodiment each of the stabilizing wings is nonfoldable. In one example, each of the stabilizing wings has a generally a trapezoidal shape. In another example, each of the stabilizing wings has a controlling system.

In an exemplary embodiment, one of the fixed main wings is located above the tail portion when in the stowed position.

In a further exemplary embodiment, the tail portion has a landing gear and each stabilizing wing has a root end, the rear landing gear is near the root end of the stabilizing wings for ground clearance during landing and takeoff.

In yet another embodiment, the fuselage has a horizontal axis and a vertical axis and each stabilizing wing has a wing reference plane, the wing reference plane intersects the vertical axis below the horizontal axis to form an angle A. In an embodiment, the angle A is from about 20 degrees to less than about 90 degrees. In another embodiment, the angle A is from about 30 degrees to about 45 degrees.

In one embodiment, the fuselage has a first side surface and a stabilizing wing has a root end, and at least a portion of the root end is on the bottom half of the first side surface.

In another embodiment, the fuselage has a front portion, the pair of stabilizing wings disposed on the front portion of the fuselage. An example provides that the pair of stabilizing wings are nonfoldable. Another example provides that each of the stabilizing wings is generally a trapezoidal shape. In still another example, one of the fixed main wings is located above the front portion of the fuselage when in the stowed position. An example provides that each of the stabilizing wings has a controlling system.

In yet another embodiment, each of stabilizing wings has a generally rectangular shape.

Other aspects, features, and advantages will become apparent from the following detailed description when taken in conjunction with the accompanying drawings, which are a part of this disclosure and which illustrate, by way of example, principles of the inventions disclosed.

### DESCRIPTION OF THE DRAWINGS

The novel features believed characteristic of the embodiments of the present disclosure are set forth in the appended claims. However, the embodiments themselves, as well as a preferred mode of use, and further objectives and advantages thereof, will best be understood by reference to the following detailed description when read in conjunction with the accompanying drawings, wherein:
FIG. 1 is a perspective view of an aircraft, according to one example embodiment;
FIG. 2 is a perspective view of the aircraft in FIG. 1 in a stowed position, according to one example embodiment;
FIG. 3 is a side view of an aircraft, according to one example embodiment;
FIG. 4 is a cross-sectional illustrative view of the fuselage 102 and stabilizing wings 140 and 142, according to one example embodiment;
FIG. 5 is a side view of an aircraft, according to one example embodiment;
FIG. 6 is a top view of the tail of an aircraft, according to one example embodiment;
FIG. 7 is a top view of the tail of an aircraft, according to one example embodiment; and
FIG. 8 is a top view of the tail of an aircraft, according to one example embodiment.

### DESCRIPTION OF THE PREFERRED EMBODIMENT

Illustrative embodiments of the apparatus and method are described below. In the interest of clarity, all features of an actual implementation may not be described in this specification. It will of course be appreciated that in the development of any such actual embodiment, numerous implementation-specific decisions must be made to achieve the developer's specific goals, such as compliance with system-related and business-related constraints, which will vary from one implementation to another. Moreover, it will be appreciated that such a development effort might be complex and time-consuming but would nevertheless be a routine undertaking for those of ordinary skill in the art having the benefit of this disclosure

In the specification, reference may be made to the spatial relationships between various components and to the spatial orientation of various aspects of components as the devices are depicted in the attached drawings. However, as will be recognized by those skilled in the art after a complete reading of the present application, the devices, members, apparatuses, *etc.* described herein may be positioned in any desired orientation. Thus, the use of terms such as "above," "below," "upper," "lower," or other like terms to describe a spatial relationship between various components or to describe the spatial orientation of aspects of such components should be understood to describe a relative relationship between the components or a spatial orientation of aspects of such components, respectively, as the device described herein may be oriented in any desired direction.

The figures herein show three mutually orthogonal directions X, Y, and Z forming a three-dimensional frame of reference XYZ. A longitudinal axis "X" 20 corresponds to the roll axis that extends through the center of the winged aircraft 100 in the fore and after directions. A horizontal axis "Y" 30 said to be "transverse" is perpendicular to the longitudinal axis 20 and extends in the left and right directions. The horizontal axis 30 corresponds to the pitch axis (also known as a control pitch axis or "CPA") inherent to the winged aircraft 100. The X-Y planes are considered to be "horizontal". A vertical axis "Z" 40 is the yaw axis that extends in an up and down direction inherent to the winged aircraft 100. The vertical axis 40 is oriented perpendicular with respect to the X-Y axes. Corresponding features of the invention are referred to with the same reference numerals throughout the figures shown.

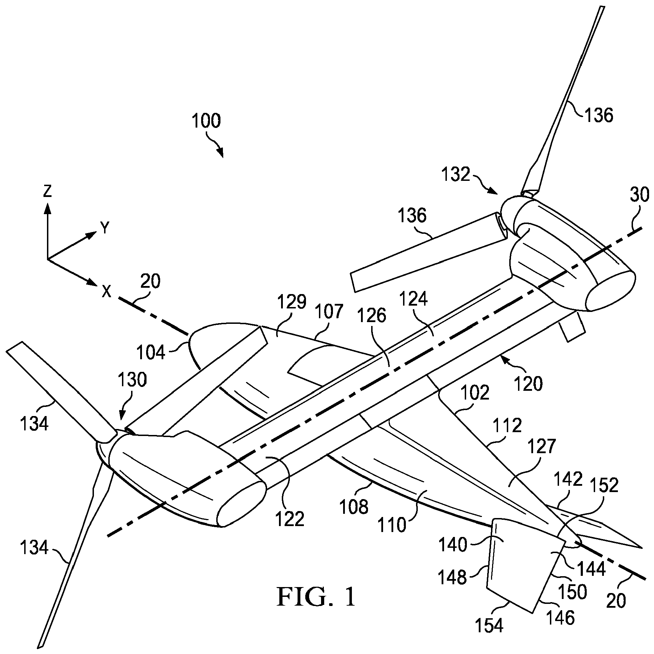

According to FIG. 1, the winged aircraft 100 includes a central main body as fuselage 102. The fuselage 102 extends along the longitudinal axis 20 from a fuselage front end 104 to a fuselage rear end 106. In an embodiment, a cabin is included in the fuselage 102. The fuselage front end 104 points into the forward direction of the aircraft 100. The fuselage includes a top surface 107, a bottom surface 108, first side surface 110 and second side surface 112. The winged aircraft 100 has no conventional empennage.

A foldable main wing 120 providing lift is located on the fuselage 102. The flight position of the foldable main wing 120 is generally perpendicular to the longitudinal axis 20 of the fuselage 102. The foldable main wing 120 includes a pair of fixed main wings 122 and 124 connected to a rotatable hub area 126 disposed on the top surface 107 of the fuselage 102. The fixed main wings 122 and 124 are inboard wings and can be integrated into a variety of aircraft configurations with or without outboard wings. Further, in another embodiment, the main wings 122 and 124 can be used with an unmanned version of winged aircraft 100. In other embodiments, the winged aircraft 100 is a tiltrotor aircraft having rotors and nacelles at the each of the outboard ends of the main wing 122 and 124.

Each wing 122 and 124 includes a propulsion system 130 and 132, respectively. The propulsion systems 130 and 132 each respectively include a plurality of rotor blades 134 and 136 controlled with by an engine and gearbox connected to a cross-wing driveshaft. In an embodiment, the driveshaft is one continuous driveshaft extending from propulsion system 130 to propulsion system 132. In another embodiment, the driveshaft is separated by a gearbox located in the fuselage 102. The propulsion systems 130 and 132 provide a forward thrust in which lifting force is supplied by wings 122 and 124 during flight mode. In one embodiment, the aircraft can include at least one fuselage mounted gearbox and engine to power a fuselage mounted propulsion system.

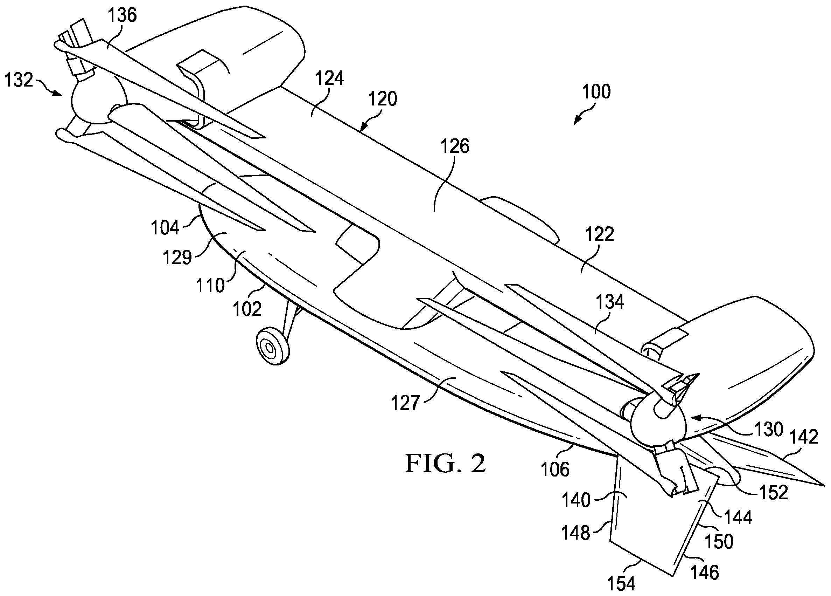

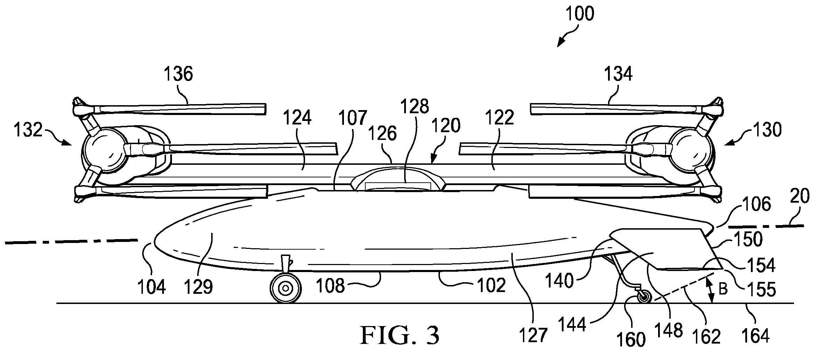

FIGS. 2 and 3 illustrate an exemplary embodiment of the foldable main wing 120 in the stowed position. For storage the foldable main wing 120 is rotated from flight mode orientation where the main wing 120 is general perpendicular to the longitudinal axis 20 to a storage or stowed positon where the foldable main wing 120 is generally parallel to the longitudinal axis 20 of the fuselage 120. The hub area 126 in the main wing 120 is mechanically connected to a rotating system 128 disposed in the top surface 107 of the fuselage 102. The rotating system 128 includes a wing pivot structure having at least one of the following connected to the fuselage 102: a bearing, a plurality of spherical bearings, and a ring structural system. In one embodiment, the rotating system 128 includes a plurality of spherical bearings to provide the main wing 120 to fuselage 102 connection.

In one embodiment, the foldable main wing 120 is the pair of fixed wings 122 and 124 connected to the hub area 126 that can rotate as a unitary unit about the hub area 126 for stowage. In one example, the fixed main wing 122 is rotated from flight mode to stowed mode and is disposed over the tail portion 127 of the aircraft 100 in stowed mode. In another example, the fixed wing 124 is rotated from flight mode to stowed mode and is disposed over the front portion 129 of the aircraft 100 in stowed mode. In still another example, the fixed wing 122 is rotated from flight mode to stowed mode and is disposed over the front portion 129 of the aircraft in stowed mode. In yet another example, the fixed wing 124 is rotated from flight mode to stowed mode and is disposed over the tail portion 127 of the aircraft in the stowed mode. Another embodiment provides that at least one of the fixed main wings 122 and 124 is rotated from a flight mode to a stowed mode.

In yet another embodiment, the foldable main wing 120 includes at least a foldable portion that is rotated or otherwise moved from a flight mode to a stowed mode. In one embodiment, the foldable portion includes at least one section of the main wings 122 and 124. In another embodiment, the foldable portion includes at least one of the following movable components on the distal ends of the main wings 122 and 124: a foldable rotor, a foldable pylon, a foldable engine nacelle, a foldable rotor blade 134, a foldable rotor blade 136, a foldable propulsion system 130, and a foldable propulsion system 132. FIGS. 2-3 illustrate the rotor blades 134 and 136 in stowed mode parallel to the longitudinal axis 20 and positioned inward so that all the blades tips are near the hub area 126. The stowed position with the main wing 120 in-line with the fuselage reduces the footprint of the winged aircraft 100 in restricted space applications such as ship-board operations or storage in a hangar.

As shown in FIGS. 1-3, the winged aircraft 100 includes a pair of stabilizing wings 140 and 142 to provide stability and control of the aircraft in flight mode. Each of the stabilizing wings 140 and 142 has a generally trapezoidal shape extending outwardly and downwardly from the fuselage 102. The stabilizing wings 140 and 142 are arranged on opposing sides of the fuselage 102 in the horizontal X-Y plane and are respectively mounted between the main wings 122 and 124 and the fuselage rear end 106. In one embodiment, the stabilizing wings 140 and 142 are a pair of tail wings or tails.

The stabilizing wings 140 and 142 are connected only to or directly to the fuselage 102. In particular, the stabilizing wings 140 and 142 are not arranged on a rudder or other tail portion 127 extending from the fuselage 102; the stabilizing wings 140 and 142 are connected directly to the fuselage 102 first side surface 110 and second side surface 112, respectively. Since the winged aircraft 100 lacks a conventional empennage extending vertically beyond the fuselage 102, a portion of the foldable main wing 120 can pass directly over the tail portion 127 and top of the rear end 106 of the aircraft 100 without interference or a tail folding mechanisms.

The stabilizing wing 140 is substantially symmetric to the stabilizing wing 142; therefore, for sake of efficiency certain features will be disclosed only with regard to the stabilizing wing 140. However, one of ordinary skill in the art would fully appreciate an understanding of the stabilizing wing 142 based upon the disclosure herein of the stabilizing wing 140.

The stabilizing wing 140 has anhedral or downward slanting surfaces. The stabilizing wing 140 has an upper surface 144, a lower surface 146, a leading edge 148, a trailing edge 150, a root end 152; and an outer or tip end 154; respectively, as shown in FIGS. 1-4.

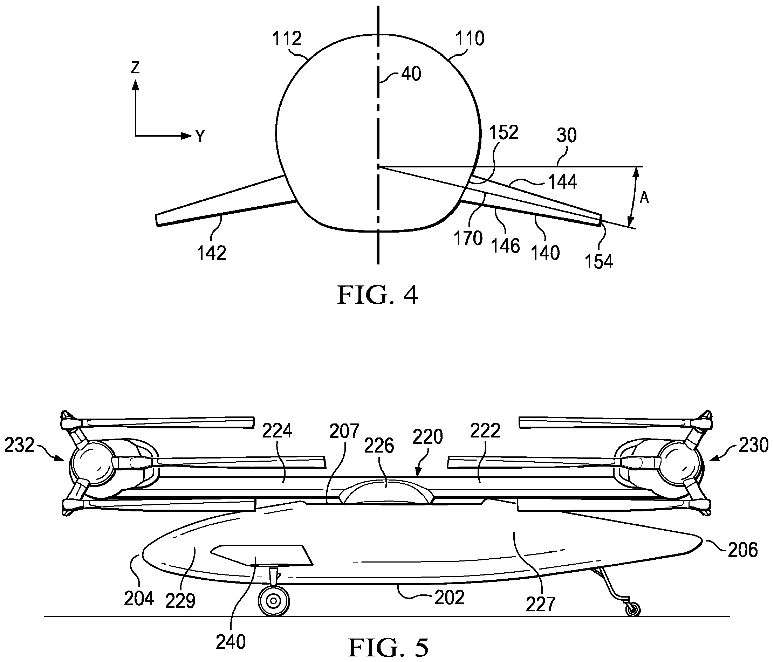

The stabilizing wing 140 has a respective wing reference plane 170 in the center of the wing 140 between the upper surface 144 and lower surfaces 146 as shown in FIG. 4. The wing reference plane 170 intersects the vertical axis 40 below the horizontal axis 30 to form the angle A. The angle A is from about 20 degrees to less than 90 degrees. In another embodiment, the angle A is from about 30 degrees to about 45 degrees. In still another embodiment, the angle A is an acute angle. In yet another embodiment, the wing reference plane 170 is oriented at an angle below the horizontal axis 30.

In one embodiment, at least one of the wing reference plane 170, the upper surface 144, and the lower surface 146 has an anhedral orientation.

In another embodiment the stabilizing wing root end 152 is located below the Y axis 20, where the Y axis 20 is located to intersect the fuselage 102. In an exemplary embodiment the root end 152 of the stabilizing wing 140 is entirely located in the bottom half of at least one of the side surfaces 110 and 112 of the fuselage 102. In another embodiment, at least a portion of the root end 152 is located in the bottom half of the at least one of the side surface 110 and 112 of the fuselage 102. In another exemplary embodiment the root end 152 is entirely located below the top surface 107 of the fuselage 102. In another embodiment, at least a portion of the root end 152 is located below the top surface 107 of the fuselage 102.

Since the stabilizing wings 140 and 142 are in a downward or inverted orientation, the rear end 106 and generally the tail section 127 of the aircraft 100 is lower and shorter as compared to a plane with a conventional empennage including a vertical tail section or rudder. The lower rear end section 106 and tail portion 127 of the aircraft 100 permits rotation of the folding main wing 120 into the folded stowed position as shown in FIGS. 2 and 3. Moreover, the winged aircraft 100 provides a smaller footprint in the stowed mode as compared to an aircraft with a conventional empennage, because the tail portion 127 is shorter than a conventional empennage. In an aircraft with a conventional empennage, the vertical tail surface interferes with the foldable main wing 120 as it rotates into the stowed position, which requires either a means to fold the vertical tail surface or an extended tail portion for clearance of the rotated wing.

An embodiment provides that at least one of the fuselage 102 and stabilizing wings 140 and 142 are not folded, nonfoldable, or incapable of being folded in the stowed position.

The orientation and position of the stabilizing wings 140 and rear landing gear 160 provides ground clearance for landing on runways having a restricted length such as on an aircraft carrier. In one embodiment, the rear landing gear 160 is located on the bottom surface 108 in the tail portion 127 of the aircraft. In another embodiment, the rear landing gear 160 is disposed adjacent to the stabilizing wing 140. The intersection of the trailing edge 150 and outer end 154 is a ground clearance point 155 that is located generally near the rear end 106 of the fuselage 106 and provides sufficient clearance from the ground for landing.

In one embodiment, the ground clearance point 155 is located on a clearance plane 162 that intersects with the ground and the rear landing gear 160. A ground plane 164 is the X-Y plane for the ground surface as shown in FIG. 3. The clearance plane 162 intersects the surface plane 162 to form an angle B. The angle B is from about 40 degrees to about 15 degrees. In another embodiment, the angle B is from about 30 degrees to about 20 degrees.

The stabilizing wings 140 and 142 can each include a controlling system. The control system can be control surfaces that are movably mounted on the stabilizing wings 140 at the trailing edge 150 for controlling pitch, yaw, and roll, thereby providing directional stability and control. The control surfaces can be integrated into the stabilizing wings 140; for example, but not limitation, in the elevator, rudder or ruddervator.

FIG. 5 is an example of stabilizing wings 140 and 142. Certain components of the stabilizing wings 140 and 142 are as described above in connection with the winged aircraft 100. Those components bear similar reference characters to the components of the stabilizing wings 140 and 142, but with a leading '2' rather than a leading '1'. The stabilizing wings 240 and 242 are arranged on opposing sides of the fuselage 202 in the horizontal X-Y plane and are respectively mounted between the fuselage front end 204 and the main wings 222 and 224. In another embodiment, as shown in FIG. 5, the stabilizing wings 240 and 242 are respectively mounted between the fuselage front end 204 and the hub area 226. In an embodiment, the stabilizing wings 240 and 242 are a pair of canards.

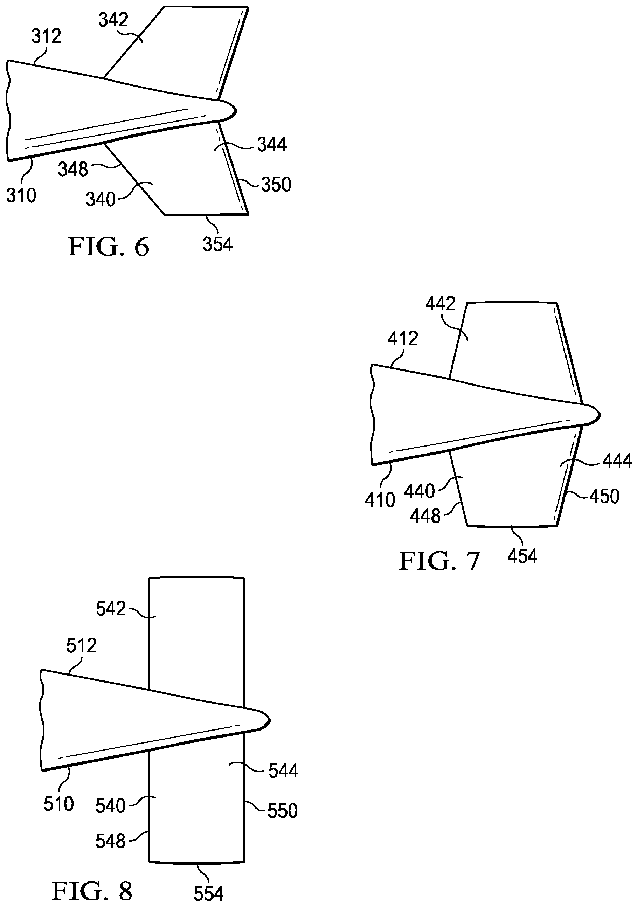

FIG. 6 is still another example of the stabilizing wings 140 and 142. Certain components of the stabilizing wings 140 and 142 are as described above in connection with the winged aircraft 100. Those components bear similar reference characters to the components of the stabilizing wings 140 and 142, but with a leading '3' rather than a leading '1'. The leading edge 348 and trailing edge 350 are swept aft and each has a tapered angle orientation. In another embodiment, at least one of the following are swept aft: the leading edge 348 and trailing edge 350.

FIG. 7 is still another example of the stabilizing wings 140 and 142. Certain components of the stabilizing wings 140 and 142 are as described above in connection with the winged aircraft 100. Those components bear similar reference characters to the components of the stabilizing wings 140 and 142, but with a leading '4' rather than a leading '1'. The leading edges 448 are swept aft and trailing edges 450 are swept forward and each has a tapered angle orientation. In one embodiment, at least one of the following are swept forward: the leading edge 448 and trailing edge 450.

FIG. 8 is still another example of the stabilizing wings 140 and 142. Certain components of the stabilizing wings 140 and 142 are as described above in connection with the winged aircraft 100. Those component bear similar reference characters to the components of the stabilizing wings 140 and 142, but with a leading '5' rather than a leading '1'. The leading edge 548 and trailing edge 550 have a generally rectangular shape and are not swept in a particular direction.

The illustrative embodiments of the foldable aircraft with anhedral stabilizing wings described herein can advantageously provide at least one of the following benefits as compared to other foldable aircrafts: a lighter aircraft since there is no vertical tail section and there is no tail folding mechanism, a smaller footprint since the tail is shorter, and reduces the number of surfaces that can be intercepted by radar waves since there is no conventional vertical tail section.

Where numerical ranges or limitations are expressly stated, such express ranges or limitations should be understood to include iterative ranges or limitations of like magnitude falling within the expressly stated ranges or limitations (e.g., from about 1 to about 10 includes 2, 3, 4, etc.; greater than 0.10 includes 0.11, 0.12, 0.13, etc.). For example, whenever a numerical range with a lower limit, Rₗ, and an upper, Rᵤ, is disclosed, any number falling within the range is specifically disclosed. In particular, the following numbers within the range are specifically disclosed: R= Rₗ +k^{*}( Rᵤ - Rₗ), wherein k is a variable ranging from 1 percent to 100 percent with a 1 percent increment, i.e., k is 1 percent, 2 percent, 3 percent, 4 percent, 5 percent, ..., 50 percent, 51 percent, 52 percent, ...., 95 percent, 96 percent, 97 percent, 98 percent, 99 percent, or 100 percent. Unless otherwise stated, the term "about" shall mean plus or minus 5 percent of the subsequent value. Moreover, any numerical range defined by two R numbers as defined in the above is also specifically disclosed. Use of the term "optionally" with respect to any element of a claim means that the element is required, or alternatively, the element is not required, both alternatives being within the scope of the claim. Accordingly, the scope of protection is not limited by the description set out above but is defined by the claims that follow.

## Claims

1. An aircraft (100) comprising:
a fuselage (102) having a longitudinal axis (20) extending through the fuselage front end (104) and the fuselage rear end (106);
a foldable wing (120) located on the fuselage (102) and being movable between a flight position wherein the wing is generally perpendicular to the longitudinal axis (20), and a stowed position wherein the wing (120) is generally parallel to the longitudinal axis (20);
a pair of stabilizing wings (140, 142) having an anhedral orientation disposed on the fuselage (102) adjacent to the fuselage rear end (106) when the foldable wing (120) is in the flight position; and
a rear landing gear (160) connected directly to the fuselage (102) and disposed adjacent to the pair of stabilizing wings (140, 142).

2. The aircraft (100) of Claim 1, wherein the foldable wing (120) comprises a hub area (126) and a pair of fixed main wings (122, 124), the hub area (126) being connected to the fuselage (102) and the pair of fixed main wings (122, 124).

3. The aircraft (100) of Claim 2, wherein each of the fixed main wings (122, 124) has a foldable portion on the distal end of the wing.

4. The aircraft (100) of Claim 3, wherein the foldable portion has a foldable rotor blade (134, 136).

5. The aircraft (100) of Claim 2 or of Claim 3 or of Claim 4, wherein each of the stabilizing wings (140, 142) is:
(i) nonfoldable; and/or
(ii) generally a trapezoidal shape.

6. The aircraft (100) of Claim 5 (part (i) or part (ii)), wherein the fuselage (102) has a tail portion (127) adjacent to the fuselage rear end (106):
wherein each of the stabilizing wings (140, 142) has a controlling system and/or
wherein one of the fixed main wings (122, 124) is located above the tail portion (127) when in the stowed position.

7. The aircraft (100) of Claim 1 or of any preceding claim, wherein the fuselage (102) has a top surface (107) and a bottom surface (108), wherein each stabilizing wing (140, 142) has a root end (152) disposed below the top surface (107).

8. The aircraft (100) of Claim 7, wherein the fuselage (102) has a horizontal axis (30) disposed in the bottom surface (108) and each stabilizing wing (140, 142) has a wing reference plane (170), the wing reference plane (170) and the horizontal axis (30) form an angle A, and optionally or preferably wherein:-
(i) the angle A is from about 20 degrees to less than about 90 degrees; or
(ii) the angle A is from about 30 degrees to about 45 degrees.

9. An aircraft (100) comprising:
a fuselage (102) having a longitudinal axis (20) extending through the fuselage front end (104) and the fuselage rear end (106), the fuselage (102) including a front portion adjacent to the fuselage front end (104) and a tail portion (127) adjacent to the fuselage rear end (106);
a foldable wing (120) located on the fuselage (102) and being movable between a flight position wherein the wing is generally perpendicular to the longitudinal axis (20), and a stowed position wherein the wing (120) is generally parallel to the longitudinal axis (20), the foldable wing (120) comprises a hub area (126) connected to the fuselage (102) and a pair of fixed main wings (122, 124) connected to the hub area (126);
a pair of stabilizing wings (140, 142) having an anhedral orientation disposed on the front portion (129) of fuselage (102); and
a rear landing gear (160) connected directly to the fuselage (102) and disposed in the tail portion (127) of the fuselage (102).

10. The aircraft (100) of Claim 9, wherein the pair of stabilizing wings (140, 142) are nonfoldable and/or wherein each of the stabilizing wings (140, 142) is generally a trapezoidal shape.

11. The aircraft (100) of Claim 9 or of Claim 10, wherein one of the fixed main wings (122, 124) is located above the front portion of the fuselage (102) when in the stowed position.

12. The aircraft (100) of Claim 9 or of Claim 10 or of Claim 11, wherein each of the stabilizing wings (140, 142) has a controlling system.

13. The aircraft (100) of Claim 1 or of Claim 9 or of any preceding claim, wherein each of stabilizing wing (140, 142) has a generally rectangular shape.

## Patentansprüche

1. Flugzeug (100), umfassend:
einen Rumpf (102), der eine Längsachse (20) aufweist, die sich durch das Vorderende des Rumpfs (104) und das Hinterende des Rumpfs (106) erstreckt;
einen faltbaren Flügel (120), der an dem Rumpf (102) positioniert ist und bewegbar ist zwischen einer Flugstellung, in der der Flügel allgemein rechtwinklig zu der Längsachse (20) steht, und einer eingezogenen Stellung, in der der Flügel (120) allgemein parallel zu der Längsachse (20) steht;
ein Stabilisierungsflügelpaar (140, 142), das eine abwärts gerichtete Ausrichtung aufweist und an dem Rumpf (102) angrenzend zu dem Hinterende des Rumpfs (106) angeordnet ist, wenn sich der faltbare Flügel (120) in der Flugstellung befindet; und
ein hinteres Fahrwerk (160), das direkt mit dem Rumpf (102) verbunden ist und angrenzend zu dem Stabilisierungsflügelpaar (140, 142) angeordnet ist.

2. Flugzeug (100) nach Anspruch 1, wobei der faltbare Flügel (120) einen Nabenbereich (126) und ein fixes Hauptflügelpaar (122, 124) umfasst, wobei der Nabenbereich (126) mit dem Rumpf (102) und dem fixen Hauptflügelpaar (122, 124) verbunden ist.

3. Flugzeug (100) nach Anspruch 2, wobei jeder der fixen Hauptflügel (122, 124) am distalen Ende des Flügels einen faltbaren Abschnitt aufweist.

4. Flugzeug (100) nach Anspruch 3, wobei der faltbare Abschnitt ein faltbares Rotorblatt (134, 136) aufweist.

5. Flugzeug (100) nach Anspruch 2 oder nach Anspruch 3 oder nach Anspruch 4, wobei jeder der Stabilisierungsflügel (140, 142):
(i) nicht faltbar ist; und/oder
(ii) allgemein eine trapezförmige Forma ist.

6. Flugzeug (100) nach Anspruch 5 (Teil (i) oder Teil (ii)), wobei der Rumpf (102) einen Heckabschnitt (127) angrenzend zu dem Hinterende des Rumpfs (106) aufweist:
wobei jeder der Stabilisierungsflügel (140, 142) ein Steuerungssystem aufweist und/oder
wobei einer der fixen Hauptflügel (122, 124) über dem Heckabschnitt (127) positioniert ist, wenn er sich in der eingezogenen Stellung befindet.

7. Flugzeug (100) nach Anspruch 1 oder einem der vorstehenden Ansprüche, wobei der Rumpf (102) eine obere Oberfläche (107) und eine untere Oberfläche (108) aufweist, wobei jeder Stabilisierungsflügel (140, 142) ein Fußende (152) aufweist, das unter der oberen Oberfläche (107) angeordnet ist.

8. Flugzeug (100) nach Anspruch 7, wobei der Rumpf (102) eine horizontale Achse (30) aufweist, die an der unteren Oberfläche (108) angeordnet ist, und jeder Stabilisierungsflügel (140, 142) eine Flügelreferenzebene (170) aufweist, wobei die Flügelreferenzebene (170) und die horizontale Achse (30) einen Winkel A bilden, und wobei optional oder vorzugsweise:
(i) der Winkel A von ungefähr 20 Grad bis weniger als ungefähr 90 Grad beträgt; oder
(ii) der Winkel A von ungefähr 30 Grad bis ungefähr 45 Gard beträgt.

9. Flugzeug (100), umfassend:
einen Rumpf (102), der eine Längsachse (20) aufweist, die sich durch das Vorderende des Rumpfs (104) und das Hinterende des Rumpfs (106) erstreckt, wobei der Rumpf (102) einen vorderen Abschnitt angrenzend zu dem Vorderende des Rumpfs (104) und einen Heckabschnitt (127) angrenzend zu dem Hinterende des Rumpfs (106) einschließt;
einen faltbaren Flügel (120), der an dem Rumpf (102) positioniert ist und bewegbar ist zwischen einer Flugstellung, in der der Flügel allgemein rechtwinklig zu der Längsachse (20) steht, und einer eingezogenen Stellung, in der der Flügel (120) allgemein parallel zu der Längsachse (20) steht, wobei der faltbare Flügel (120) einen Nabenbereich (126) umfasst, der mit dem Rumpf (102) verbunden ist, und ein fixes Hauptflügelpaar (122, 124), das mit dem Nabenbereich (126) verbunden ist;
ein Stabilisierungsflügelpaar (140, 142), das eine abwärts gerichtete Ausrichtung aufweist und am vorderen Abschnitt (129) des Rumpfs (102) angeordnet ist; und
ein hinteres Fahrwerk (160), das direkt mit dem Rumpf (102) verbunden ist und in dem Heckabschnitt (127) des Rumpfs (102) angeordnet ist.

10. Flugzeug (100) nach Anspruch 9, wobei das Stabilisierungsflügelpaar (140, 142) nicht faltbar ist und/oder wobei jeder der Stabilisierungsflügel (140, 142) allgemein eine trapezförmige Form ist.

11. Flugzeug (100) nach Anspruch 9 oder nach Anspruch 10, wobei einer der fixen Hauptflügel (122, 124) über dem vorderen Abschnitt des Rumpfs (102) positioniert ist, wenn er sich in der eingezogenen Stellung befindet.

12. Flugzeug (100) nach Anspruch 9 oder nach Anspruch 10 oder nach Anspruch 11, wobei jeder der Stabilisierungsflügel (140, 142) ein Steuerungssystem aufweist.

13. Flugzeug (100) nach Anspruch 1 oder nach Anspruch 9 oder nach einem der vorstehenden Ansprüche, wobei jeder der Stabilisierungsflügel (140, 142) eine allgemein rechteckige Form aufweist.

## Revendications

1. Aéronef (100) comprenant :
un fuselage (102) présentant un axe longitudinal (20) s'étendant à travers l'extrémité avant de fuselage (104) et l'extrémité arrière de fuselage (106) ;
une aile pliable (120) située sur le fuselage (102) et étant mobile entre une position de vol dans laquelle l'aile est généralement perpendiculaire à l'axe longitudinal (20), et une position repliée dans laquelle l'aile (120) est généralement parallèle à l'axe longitudinal (20) ;
une paire d'ailes de stabilisation (140, 142) présentant une orientation à dièdre négatif disposées sur le fuselage (102) de manière adjacente à l'extrémité arrière de fuselage (106) lorsque l'aile pliable (120) se trouve dans la position de vol ; et
un train d'atterrissage arrière (160) relié directement au fuselage (102) et disposé de manière adjacente à la paire d'ailes de stabilisation (140, 142).

2. Aéronef (100) selon la revendication 1, dans lequel l'aile pliable (120) comprend une zone de moyeu (126) et une paire d'ailes principales fixes (122, 124), la zone de moyeu (126) étant reliée au fuselage (102) et à la paire d'ailes principales fixes (122, 124).

3. Aéronef (100) selon la revendication 2, dans lequel chacune des ailes principales fixes (122, 124) présente une partie pliable sur l'extrémité distale de l'aile.

4. Aéronef (100) selon la revendication 3, dans lequel la partie pliable présente une pale de rotor pliable (134, 136).

5. Aéronef (100) selon la revendication 2 ou selon la revendication 3 ou selon la revendication 4, dans lequel chacune des ailes de stabilisation (140, 142) est :
(i) non pliable ; et/ou
(ii) généralement de forme trapézoïdale.

6. Aéronef (100) selon la revendication 5 (partie (i) ou partie (ii)), dans lequel le fuselage (102) présente une partie de queue (127) adjacente à l'extrémité arrière de fuselage (106) :
dans lequel chacune des ailes de stabilisation (140, 142) présente un système de commande et/ou
dans lequel une des ailes principales fixes (122, 124) est située au-dessus de la partie de queue (127) dans la position repliée.

7. Aéronef (100) selon la revendication 1 ou selon l'une quelconque des revendications précédentes, dans lequel le fuselage (102) présente une surface supérieure (107) et une surface inférieure (108), dans lequel chaque aile de stabilisation (140, 142) présente une extrémité de base (152) disposée en dessous de la surface supérieure (107).

8. Aéronef (100) selon la revendication 7, dans lequel le fuselage (102) présente un axe horizontal (30) disposé dans la surface inférieure (108) et chaque aile de stabilisation (140, 142) présente un plan de référence d'aile (170), le plan de référence d'aile (170) et l'axe horizontal (30) forment un angle A, et de manière optionnelle ou de préférence dans lequel :
(i) l'angle A est d'environ 20 degrés à moins d'environ 90 degrés ; ou
(ii) l'angle A est d'environ 30 degrés à environ 45 degrés.

9. Aéronef (100) comprenant :
un fuselage (102) présentant un axe longitudinal (20) s'étendant à travers l'extrémité avant de fuselage (104) et l'extrémité arrière de fuselage (106), le fuselage (102) incluant une partie avant adjacente à l'extrémité avant de fuselage (104) et une partie de queue (127) adjacente à l'extrémité arrière de fuselage (106) ;
une aile pliable (120) située sur le fuselage (102) et étant mobile entre une position de vol dans laquelle l'aile est généralement perpendiculaire à l'axe longitudinal (20), et une position repliée dans laquelle l'aile (120) est généralement parallèle à l'axe longitudinal (20), l'aile pliable (120) comprend une zone de moyeu (126) reliée au fuselage (102) et une paire d'ailes principales fixes (122, 124) reliées à la zone de moyeu (126) ;
une paire d'ailes de stabilisation (140, 142) présentant une orientation à dièdre négatif disposées sur la partie avant (129) du fuselage (102) ; et
un train d'atterrissage arrière (160) relié directement au fuselage (102) et disposé dans la partie de queue (127) du fuselage (102).

10. Aéronef (100) selon la revendication 9, dans lequel la paire d'ailes de stabilisation (140, 142) sont non pliables et/ou dans lequel chacune des ailes de stabilisation (140, 142) est généralement de forme trapézoïdale.

11. Aéronef (100) selon la revendication 9 ou selon la revendication 10, dans lequel une des ailes principales fixes (122, 124) est située au-dessus de la partie avant du fuselage (102) dans la position repliée.

12. Aéronef (100) selon la revendication 9 ou selon la revendication 10 ou selon la revendication 11, dans lequel chacune des ailes de stabilisation (140, 142) présente un système de commande.

13. Aéronef (100) selon la revendication 1 ou selon la revendication 9 ou selon l'une quelconque des revendications précédentes, dans lequel chacune des ailes de stabilisation (140, 142) présente une forme généralement rectangulaire.
